# EUROPÄISCHE PATENTSCHRIFT

(11) **EP 2 821 187 B1**
(45) Veröffentlichungstag und Bekanntmachung des Hinweises auf die Patenterteilung: **23.11.2016**
(21) Anmeldenummer: 14174561.2
(22) Anmeldetag: 26.06.2014
(51) Int. Cl.: B25J 9/00

(54) **Bearbeitungseinrichtung und Bearbeitungsverfahren**
Processing device and processing method
Dispositif et procédé de traitement

(30) Priorität: 01.07.2013 DE 202013102852 U
(43) Veröffentlichungstag der Anmeldung: 07.01.2015
(73) Patentinhaber: KUKA Systems GmbH, 86165 Augsburg (DE)
(72) Erfinder: Sturm, Thomas, 85259 Wiedenzhausen (DE)
(74) Vertreter: Ernicke, Klaus Stefan

(56) Entgegenhaltungen:
- DE-A1-102010 011 397
- DE-U1- 20 216 636
- DE-U1-202007 016 549
- US-A1- 2012 217 129

## Beschreibung

Die Erfindung betrifft eine Bearbeitungseinrichtung mit einer Fördereinrichtung, von der Werkstücke transportiert werden, wobei an der Fördereinrichtung ein automatisierter Prozessbereich mit einem Industrieroboter für die Bearbeitung der Werkstücke auf der Fördereinrichtung angeordnet ist. Die Erfindung betrifft auch ein entsprechendes Bearbeitungsverfahren.

Eine solche Bearbeitungseinrichtung und ein solches Bearbeitungsverfahren sind beispielsweise aus der DE-U-202 16 636 bekannt.

Aus der Praxis sind Bearbeitungseinrichtungen mit Industrierobotern in Form von einzelnen Roboterzellen oder von Bearbeitungslinien bekannt, bei denen die Werkstücke mit einer gesteuert angetriebenen Fördereinrichtung auf Paletten oder anderen Werkstückträgern durch die Stationen einer Fertigungslinie oder von Zelle zu Zelle transportiert werden. Solche Fördereinrichtungen sind z.B. als Hubshuttle, Rollen- oder Kettenförderer ausgebildet. Es ist auch bekannt, bei einer Zellenverkettung die Werkstücke mittels Handhabungsrobotern zu transportieren. In all diesen Fällen sind aus gesetzlichen Gründen umfangreiche Sicherheitsmaßnahmen zum Betriebs- und Unfallschutz erforderlich.

In solchen durch angetriebene Fördereinrichtungen verbundenen Bearbeitungseinrichtungen kommen in der Regel auch positionsgesteuerte Industrieroboter zum Einsatz, die ebenfalls wegen der hiervon ausgehenden Unfallgefahr aufwändige Sicherheitsmaßnahmen bedingen.

In der Praxis ist es ferner bekannt, taktile und für eine Mensch-Roboter-Kooperation (Abk. MRK) taugliche Roboter mit einer Nachgiebigkeitsregelung einzusetzen. Derartige Industrieroboter können als Leichtbauroboter mit niedrigem Eigengewicht und begrenzter Tragkraft ausgebildet sein. Sie eignen sich durch ihre taktilen Fähigkeiten vor allem für Montageprozesse. Der Werkstücktransport erfolgt auch in diesen Fällen mittels gesteuert angetriebener Fördereinrichtungen in Verbindung mit entsprechenden Sicherheitsvorkehrungen.

Es ist daher Aufgabe der vorliegenden Erfindung, eine verbesserte Bearbeitungstechnik aufzuzeigen.

Die Erfindung löst diese Aufgabe mit den Merkmalen im Verfahrens- und Vorrichtungshauptanspruch.

Die beanspruchte Bearbeitungstechnik, d.h. die Bearbeitungseinrichtung und das Bearbeitungsverfahren haben den Vorteil einer Verringerung des Sicherheitsaufwands und einer Verbesserung der Leistungsfähigkeit und der Wirtschaftlichkeit.

Die Bearbeitung der Werkstücke durch einen Industrieroboter und/oder durch einen Werker erfolgt während des Werkstücktransports auf der Fördereinrichtung. Die Werkstücke können während der Bearbeitung temporär in Ruhe sein und eine ggf. definierte Arbeitsposition einnehmen. Alternativ können die Werkstücke während der Transportbewegung auf der Fördereinrichtung bzw. on the fly bearbeitet werden.

Der Einsatz einer Fördereinrichtung mit Schwerkrafttransport der Werkstücke verringert den diesbezüglichen Sicherheits- und Bauaufwand. Insbesondere kann der Energie- und Steueraufwand minimiert werden. Zudem wird die Montage und Eingliederung der Fördereinrichtung in neue und bestehenden Bearbeitungseinrichtungen bzw. Bearbeitungsanlagen erleichtert.

Die beanspruchte Bearbeitungstechnik hat ferner den Vorteil einer hohen Flexibilität. Sie kann in ihrer Konfiguration und Größe verändert, insbesondere verstellt und auch erweitert oder verkleinert werden. Sie ist außerdem typflexibel und kann für unterschiedliche Werkstücke eingesetzt werden. Zudem kann die Bearbeitungseinrichtung mobil ausgebildet sein und kann sich bedarfsweise an unterschiedlichen Orten einsetzen lassen. Zudem ist eine Verkettung oder Vernetzung mehrerer Bearbeitungseinrichtungen ohne größeren Aufwand und insbesondere ohne besondere Sicherheitsvorkehrungen möglich.

Die Kombination einer als Schwerkraftförderer ausgebildeten Fördereinrichtung mit einem automatisierten Prozessbereich mit einem Industrieroboter hat weitere Vorteile. Ein solcher Industrieroboter kann nicht nur für den eigentlichen Bearbeitungsprozess, z.B. für Montage- oder Fügeaufgaben, sondern auch für fördertechnische Zwecke eingesetzt werden. Dies optimiert ebenfalls den Bau-, Steuer- und Energieaufwand. Außerdem hängt ein evtl. erforderlicher Sicherheitsaufwand nur von der Art und Ausbildung des Industrieroboters ab und ist entsprechend begrenzt. Ein automatisierter Prozessbereich kann von einer Schutzeinrichtung gegen Personenzutritt abgeschirmt sein.

Bei der beanspruchten Bearbeitungstechnik können unterschiedliche Arten von Industrierobotern zum Einsatz kommen. Dies können positionsgesteuerte oder positionsgeregelte Roboter sein, die eine hohe Leistungsfähigkeit und insbesondere Schnelligkeit haben. Sofern ein solcher Industrieroboter eine Schutzeinrichtung, z.B. einen Zaun oder eine Einhausung, verlangt, kann diese örtlich begrenzt ausgebildet und angeordnet sein. Die Fördereinrichtung kann sich durch diesen Sicherheitsbereich hindurch erstrecken.

Besondere Vorteile bestehen bei Einsatz eines Industrieroboters, der als taktiler Roboter, insbesondere als MRK-tauglicher Roboter, ausgebildet ist. Ein solcher taktiler Roboter kann eine oder mehrere Roboterachsen mit einer Kraftsteuerung oder Kraftregelung oder einer Kombination einer Positionssteuerung bzw. Positionsregelung mit einer Kraftsteuerung bzw. Kraftregelung aufweisen. Er kann auch eine integrierte und an den Roboterachsen angeordnete Sensorik aufweisen. In einer Ausführungsform ist ein Industrieroboter als taktiler Roboter mit einer oder mehreren Roboterachsen mit einer Nachgiebigkeitsregelung, insbesondere einer reinen Kraftregelung oder einer kombinierten Positions- und Kraftregelung, und einer integrierten, Belastungen aufnehmenden Sensorik, ausgebildet.

Ein solcher taktiler und MRK-tauglicher Roboter hat verschiedene Vorteile. Er kann wegen der verringerten Unfallgefahr ohne Schutzeinrichtung auskommen. Er erlaubt ferner eine Kombination mit einem manuellen Arbeitsplatz in unmittelbarer Nachbarschaft an der Fördereinrichtung. Hierbei kann außerdem der Arbeitsplatz wahlweise manuell oder automatisiert sein, wobei auch ein Wechsel stattfinden kann. Bei der beanspruchten Bearbeitungstechnik ist es generell möglich, an der Fördereinrichtung automatisierte und manuelle Prozessbereiche anzuordnen. Bei Einsatz eines solchen taktilen Roboters können diese Prozessbereiche vermischt werden bzw. einander überschneiden.

Die Bearbeitungstechnik kann außerdem einen Pufferbereich aufweisen, der unterschiedlichen Zwecken dienen kann. An der Fördereinrichtung kann ein Pufferbereich für mehrere Werkstücke oder Werkstückträger angeordnet sein. Der Pufferbereich kann auch mehrfach vorhanden sein. Der Pufferbereich kann einerseits ein Staubereich sein, um Erfordernissen und Unterschieden im Prozess- und Transporttakt gerecht zu werden und bedarfsweise eine Taktentkoppelung zu erreichen. Ein Pufferbereich kann auch als Umsetz- und Ladepuffer zur Bevorratung von leeren Werkstückträgern dienen. Ein Puffer- oder Staubereich kann mit einem manuellen Prozessbereich für einen Werker kombiniert werden, der hier z.B. eine Inspektion, Qualitätsprüfung oder dergleichen vornimmt. Die Arbeitszeit des Werkers kann dabei in optimierter Weise genutzt werden, in dem der Werker nur zeitweise anwesend ist und manuelle Arbeiten blockweise an den im Pufferbereich gesammelten Werkstücken und/oder Werkstückträgern vornimmt und diese dann im Block abtransportiert werden. Während der erneuten Auffüllung des Pufferbereichs kann der Werker anderen Tätigkeiten nachgehen.

Die Fördereinrichtung kann in unterschiedlicher Weise ausgebildet sein. Sie weist z.B. eine oder mehrere abwärts geneigte und bevorzugt im wesentlichen gerade Förderbahnen auf, auf denen mit ein oder mehreren Werkstücken beladene Werkstückträger gleitend oder bevorzugt rollend transportiert werden. Die Werkstücke können auch bei entsprechender Ausbildung ohne Werkstückträger und in direktem Kontakt mit der Förderbahn transportiert werden.

In einer Variante weist die Fördereinrichtung mehrere abwärts geneigte, gegenläufige Förderbahnen für Vorlauf und Rücklauf von Werkstücken oder Werkstückträgern auf. In einer anderen Ausführung können die Förderbahnen gleichläufig sein und die Werkstücke in die gleiche Richtung transportieren. Über eine geeignete Ausbildung der Förderbahn(en) sind unterschiedlichste Förderkonzepte mit Vorlauf und Rücklauf, Einbahnstraßenbetrieb, Umlauf- oder Verteilerbetrieb oder dergleichen möglich. Auch ein Umsetzen von Werkstücken und/oder Werkstückträgern zwischen benachbarten, insbesondere gegenläufigen Förderbahnen ist möglich. In einer Variante weist die Fördereinrichtung an einem Ende zwischen benachbarten, insbesondere gegenläufigen Förderbahnen eine Umsetzeinrichtung für das automatische Umsetzen von einem Werkstück oder einem Werkstückträger auf. Für das Umsetzen kann auch einer der vorgenannten Industrieroboter eingesetzt werden.

Die Werkstücke oder Werkstückträger können an einer Förderbahn auch in einer vorgegebenen Arbeitsposition in einem automatischen oder manuellen Prozessbereich mittels einer Positioniereinrichtung positioniert werden. Dies kann einen Stopp an einer vorgegebenen Bahnstelle und ggf. auch ein Abheben von der Förderbahn einschließen. Die Postitioniereinrichtung kann z.B. einen Stopper und/oder eine Aushubeinrichtung für ein Werkstück oder einen Werkstückträger aufweisen.

Die Postitioniereinrichtung kann derart ausgebildet sein, dass sie wahlweise von einem Werker oder von einem Industrieroboter bedient werden kann. Für den Weitertransport kann das Werkstück oder der Werkstückträger außerdem manuell oder von einem Industrieroboter angeschoben werden.

Die Fördereinrichtung ist vorzugsweise für einen rollenden Transport ausgebildet und weist hierfür mehrere Rollkörper an der Förderbahn oder an einem Werkstückträger auf. Hierbei kann auch eine Bremseinrichtung vorgesehen sein, die einem Rollkörper zugeordnet ist und diesen bremst. Hierfür kann z.B. die Bremseinrichtung eine mechanische Bremse oder eine elektrische Bremse, insbesondere eine elektrische generatorische Bremse aufweisen. Über die Bremseinrichtung kann mit fester Vorgabe oder steuerbar die Bremswirkung auf das Werkstück oder dem Werkstückträger in fester oder einstellbarer, insbesondere steuerbarer Weise beeinflusst werden. Hierüber können die Bewegungen eines Werkstücks oder eines mobilen Werkstückträgers an der Förderbahn und während der Fahrt kontrolliert werden. Dies kann insbesondere in Anpassung an den Beladezustand und das Gesamtgewicht eines beladenen Werkstückträgers geschehen. Außerdem ist einen Anpassung an die jeweilige Neigung einer Förderbahn möglich. Zudem lassen sich Stau- und Kollisionssituationen besser beherrschen.

Ein besonderer Vorteil ist die autarke Ausbildung der Bremseinrichtung, die mit der kinetischen Energie des bewegten Werkstücks oder Werkstückträgers auskommt. Eine Energiezuführung von außen und eine externe Steuerbeeinflussung sind entbehrlich. Zudem ist eine Adaption eines Werkstückträgers an unterschiedliche Einsatzbereiche an unterschiedlichen Förderbahnen oder Fördereinrichtungen möglich.

Die Bremseinrichtung kann eine Anlaufeinrichtung für einen verzögerten Eintritt der Bremswirkung aufweisen, die eine weitgehend ungebremste Anfahrbewegung ermöglicht. Ferner kann die Bremseinrichtung eine Regulierungseinrichtung für die Bremswirkung aufweisen, mit der die Bewegungsgeschwindigkeit des Werkstücks oder Werkstückträgers reguliert, insbesondere ein der höhe begrenzt und ggf. auch auf einen vorgegebenen Wert geregelt werden kann. Die Bremseinrichtung kann auch eine Selektionseinrichtung aufweisen, mit der die Bremswirkung in Abhängigkeit von der Bewegungsrichtung, insbesondere der Drehrichtung eines Rollkörpers beeinflusst und eingestellt werden kann. Insbesondere können für verschiedene Bewegungsrichtungen, z.B. bei Vorlauf und Rücklauf, unterschiedliche große Bremswirkungen eingestellt werden.

Die beanspruchte Bearbeitungstechnik hat besondere Vorteile für die Maximierung der Prozessleistungen und der Auslastung des oder der Industrieroboter. Im Arbeitsbereich eines Industrieroboters können mehrere Förderbahnen angeordnet sein. Hierdurch kann der Industrieroboter an verschiedenen Stellen bzw. Arbeitspositionen im Wechsel arbeiten und dadurch optimal ausgenutzt werden. Zudem können Folgen von Prozessschritten an den einteiligen oder bevorzugten mehrteiligen Werkstücken optimiert werden. Ein Industrieroboter, insbesondere ein für sensitive Aufgaben besonders geeigneter taktiler Roboter, kann für gleichartige und dabei zeitlich und örtlich versetzte Prozessjobs, insbesondere Montagejobs an einem Werkstück eingesetzt werden. Dieses kann beispielsweise zunächst im Vorlauf und mit zeitlichem Abstand dann wieder im örtlich getrennten Rücklauf zu diesem Industrieroboter gelangen. Letzterer kann hierfür ein einheitliches Werkzeug, z.B. ein Greifwerkzeug, einsetzen, wodurch Rüstzeiten minimiert und die Roboterauslastung maximiert werden können. In dem Zeitraum zwischen den besagten Prozessjobs können andere Prozessschritte, z.B. andere Montage- und/oder Fügearbeiten, an einer oder mehreren anderen Stellen der Fördereinrichtung durchgeführt werden.

Der Industrieroboter ist bevorzugt als Gelenkarmroboter ausgebildet. Der Industrieroboter kann ein festes oder wechselbares Werkzeug, insbesondere ein Greif- oder Fügewerkzeug, tragen.

Bevorzugt sind ein oder mehrere der besagten Industrieroboter zwischen benachbarten und bevorzugt parallel ausgerichteten Förderbahnen angeordnet. Dies hat einerseits Vorteile für die vorgenannten Mehrfachfunktionen eines solchen Industrieroboters. Andererseits können an der oder den Außenseiten der besagten Förderbahnen weitere Arbeitsplätze, insbesondere manuelle Arbeitsplätze, vorgesehen sein. Andererseits besteht die Möglichkeit für die Anordnung einer oder mehrerer Bereitstellungen für Werkstückteile, wechselbare Werkzeuge oder dgl.. Ein wechselbares Werkzeug kann auch auf einem Werkstückträger lösbar angeordnet sein und mitbewegt werden. Auf einem Werkstückträger kann eine Bereitstellung für ein Werkzeug angeordnet sein.

Ein besonderer Vorteil der beanspruchten Bearbeitungstechnik ist die hohe Flexiblität. Einerseits kann sehr schnell eine Umrüstung auf andere Typen von Werkstücken erfolgen. Zudem können auch verschiedene Werkstücktypen im Wechsel, insbesondere im freien Mix, transportiert und mit den vorgesehenen Prozessen bearbeitet werden. Hierfür kann ggf. ein Werkzeugwechsel bei dem oder den Industrierobotern erfolgen. Auch die vorgenannte Bremseinrichtung lässt sich entsprechend anpassen.

Eine hohe Flexibilität ist auch hinsichtlich der Anordnung und Funktion der ein oder mehreren Industrieroboter und des oder der ggf. eingesetzten Werker möglich. Der oder die Industrieroboter können ortsveränderlich sein, wobei sie z.B. in ihrer Position mittels einer verstellbaren Halterung am Gestell der Bearbeitungseinrichtung verändert werden. Sie können auch von der Halterung gelöst und entfernt oder an einem anderen Ort am Gestell wieder montiert werden. Auch die Fördereinrichtung ist mit einer entsprechenden Halterung verstellbar. Ferner können der oder die Industrieroboter hängend und/oder stehend am Gestell angeordnet sein. Am Gestell kann eine Hilfsvorrichtung angeordnet sein.

Die Bearbeitungseinrichtung kann mobil ausgebildet sein, wobei das Gestell lösbar angeordnet ist und eine Transporthilfe, insbesondere Staplertaschen, aufweist.

Ferner kann die Zahl und Anordnung der ein oder mehreren automatisierten und/ggf. manuellen Prozessbereiche verändert werden. Die Zahl und Anordnung der Industrieroboter innerhalb eines automatisierten Prozessbereichs ist ebenfalls beliebig veränderbar. Zudem kann die Länge der Fördereinrichtung vergrößert oder verkleinert werden. Es ist auch eine Verkettung oder Vernetzung von Fördereinrichtungen und Bearbeitungseinrichtungen möglich.

Die Werkstücke oder Werkstückträger können auf der Fördereinrichtung zwischen einander gegenüberliegenden Be- und Entladestellen transportiert werden. Sie können auch im Kreislauf auf der Fördereinrichtung geführt und an der gleichen Stelle be- und entladen werden. Das Be- und Entladen kann manuell oder automatisiert mit einer entsprechenden Einrichtung, insbesondere auch mit einem der besagten Industrieroboter, insbesondere einem taktilen Roboter erfolgen. Bei einer manuellen Be- und/oder Entladung und ggf. einer Umsetzung der Werkstückträger kann eine pneumatische Handkraftunterstützung vorhanden sein, die mit begrenzter Kraft den Werker unterstützt und dadurch keine zusätzliche Sicherheitstechnik erfordert.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1 bis 3:: eine Bearbeitungseinrichtung mit einer Fördereinrichtung und einem automatisierten Prozessbereich mit mehreren Industrierobotern in Seitenansicht und in Draufsicht sowie Stirnansicht gemäß Pfeil II und III von Figur 1,
- Figur 4:: eine Variante einer Bearbeitungseinrichtung in Stirnansicht,
- Figur 5 bis 7:: drei weitere Varianten einer Bearbeitungseinrichtung mit anderen Industrierobotern und einer Schutzeinrichtung in Draufsicht,
- Figur 8:: eine schematische Seitenansicht einer Fördereinrichtung und ihrer Förderbahnen,
- Figur 9:: eine schematische Darstellung einer Positioniereinrichtung in verschiedenen Betriebsstellungen
- Figur 10:: eine perspektivische Unteransicht eines Werkstückträgers mit einer Bremseinrichtung und
- Figur 11:: eine Schemadarstellung einer Bearbeitungsanlage.

Die Erfindung eine Bearbeitungseinrichtung (1) und ein Bearbeitungsverfahren für Werkstücke (2). Die Erfindung betrifft außerdem eine Bearbeitungsanlage (46) mit mehreren untereinander verbundenen Bearbeitungseinrichtungen (1).

Die Werkstücke (2) können von beliebiger Art und Ausbildung sein und aus beliebigen Werkstoffen bestehen. Die Werkstücke (2) können einteilig sein oder aus mehreren Werkstückteilen (13) bestehen. In der gezeigten und bevorzugten Ausführungsform sind die Werkstücke (2) oder Werkstückteile (13) als Karosseriebauteile eines Fahrzeugs ausgebildet. Sie bestehen bevorzugt zumindest teilweise aus Metall.

Die ein- oder mehrteiligen Werkstücke (2) werden in der Bearbeitungseinrichtung (1) einem Bearbeitungsprozess unterworfen. Dieser kann in unterschiedlicher Weise ausgebildet sein. Er kann insbesondere aus einer Abfolge von mehreren Prozessschritten bestehen. In dem gezeigten Ausführungsbeispiel ist der besagte Prozess ein Montageprozess, bei dem mehrere zunächst getrennt vorliegende Werkstückteile (13) in mehreren Prozessschritten miteinander verbunden und montiert werden. In der nachfolgenden Figurenbeschreibung werden einteilige und mehrteilige Werkstücke zur vereinfachten Darstellung einheitlich als Werkstücke (2) bezeichnet.

In anderen Ausführungsvarianten kann der besagte Prozess anders ausgebildet sein. Es kann sich z.B. um einen Fügeprozess handeln, bei dem verschiedene Werkstückteile miteinander gefügt und verbunden werden, z.B. durch Schweißen, Löten, Kleben, Falzen oder Clinchen oder dergleichen. Daneben sind andere Prozessvarianten mit formgebender Bearbeitung der Werktücke (2), z.B. Umformung, spanabhebender Bearbeitung oder dergleichen möglich. Weitere Prozesse können z.B. Auftrage- oder Beschichtungsprozesse, Markierungsprozesse oder auch Mischungen der vorgenannten unterschiedlichen Einzelprozesse sein.

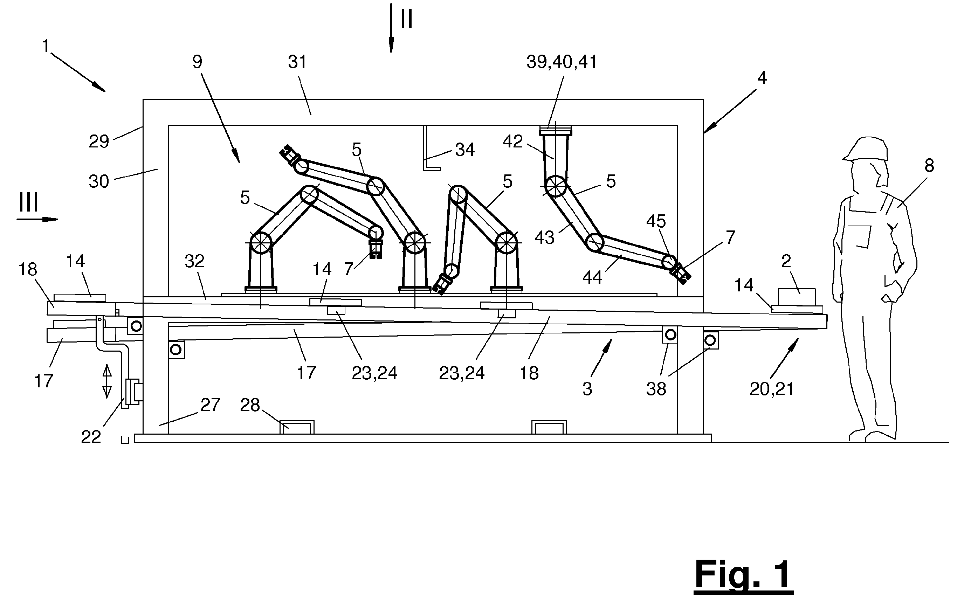

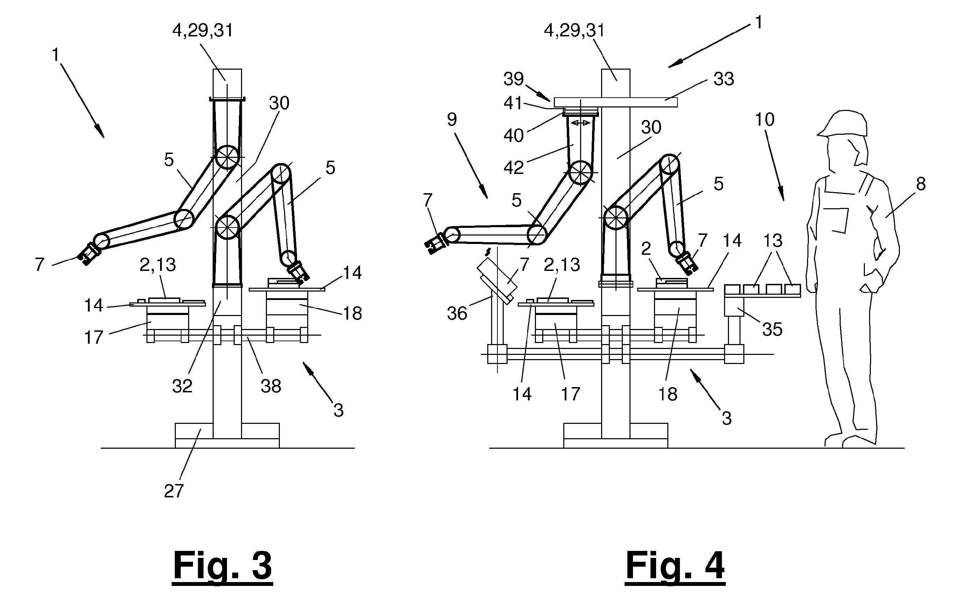

In Figur 1 bis 3 ist eine erste Variante der Bearbeitungseinrichtung (1) in einer Seitenansicht gemäß Figur 1 und in zugehöriger Draufsicht und Stirnansicht gemäß Pfeil II und III von Figur 1 dargestellt. Figur 4 bis 7 zeigen hierzu weitere Varianten.

Die Bearbeitungseinrichtung (1) weist in den Varianten jeweils eine Fördereinrichtung (3) für Werkstücke (2) und einen automatisierten Prozessbereich (9) mit einem Industrieroboter (5,6) auf. In einem Prozessbereich (9) können mehrere und ggf. unterschiedliche Industrieroboter (5,6) angeordnet sein. Die Bearbeitungseinrichtung (1) kann ferner mehrere automatisierte Prozessbereiche (9) mit jeweils einem oder mehreren Industrierobotern (5,6) aufweisen.

In den anderen Ausführungsbeispielen von Figur 4 bis 7 kann die Bearbeitungseinrichtung (1) außerdem einen manuellen Prozessbereich (10) für einen Werker (8) aufweisen, wobei dieser Prozessbereich (10) auch mehrfach vorhanden sein kann. Er kann auch für mehrere Werker (8) vorgesehen und ausgebildet sein.

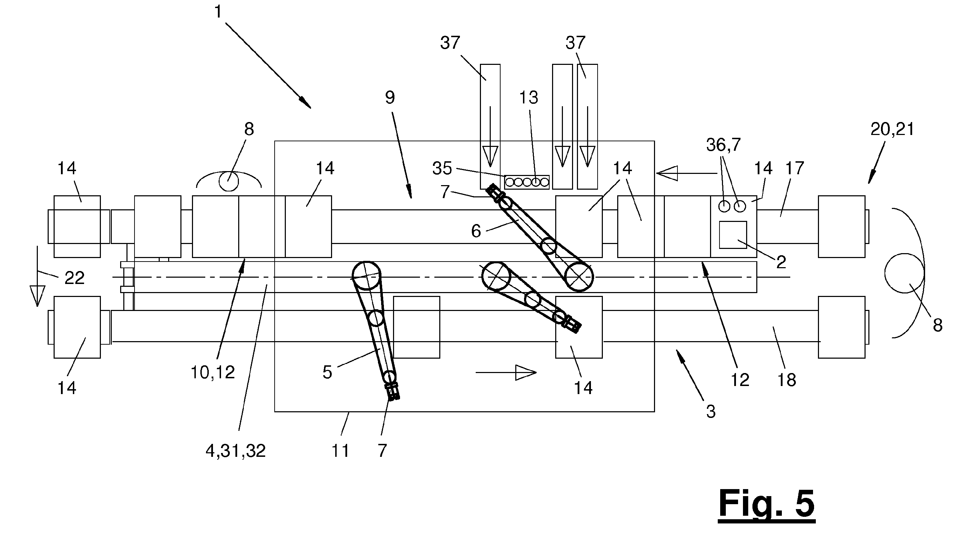

Ferner weist die Bearbeitungseinrichtung (1) in den anderen Ausführungsbeispielen von Figur 5 bis 7 einen Pufferbereich (12) auf, der ebenfalls einfach oder mehrfach vorhanden sein kann.

Der oder die Prozessbereich(e) (9,10) ist/sind der Fördereinrichtung (3) zugeordnet. Die Werkstücke (2) werden auf der Fördereinrichtung (3) bearbeitet. Dies kann im Stand oder während ihrer Transportbewegung geschehen. Bei der Bearbeitung im Prozessbereich (9,10) befinden sich die Werkstücke (2) auf der Fördereinrichtung (3). Sie können dort stehend, hängend oder in beliebiger anderer Lage angeordnet sein.

Bei der Bearbeitungseinrichtung (1) können die Industrieroboter (5,6) in gleicher oder unterschiedlicher Weise ausgebildet sein. Dies kann insbesondere ihre nachfolgend beschriebene Steuerung oder Regelung betreffen.

Ansonsten können die Industrieroboter (5,6) im wesentlichen gleichartig ausgebildet sein. Sie weisen mehrere miteinander verbundene Roboterachsen auf, die in beliebig geeigneter Weise und Kombination als rotatorische und/oder translatorische Roboterachsen ausgebildet sein können. Vorzugsweise sind die Industrieroboter (5,6) als Gelenkarmroboter mit fünf oder mehr rotatorischen Achsen und ggf. einer oder mehreren Zusatzachsen, insbesondere einer linearen Fahrachse gemäß Figur 4, ausgebildet.

In Figur 1 ist beispielhaft dargestellt, dass ein Industrieroboter (5,6) eine ggf. drehbare Basis (42) einen daran schwenkbar angeordneten ersten Roboterarm (43) und einen hieran am freien Ende ebenfalls schwenkbar angeordneten weiteren Roboterarm (44) sowie am Ende ein mehrachsiges Endglied (45), z.B. eine sogenannte Roboterhand, aufweist. Diese ist in 2-achsiger Ausführung einerseits schwenkbar mit dem zweiten Roboterarm (44) verbunden und weist ein drehendes Abtriebselement, z.B. einen Abtriebsflansch auf. Das End- oder Abtriebsglied (45) kann auch drei Achsen aufweisen und eine zusätzliche, längsgerichtete Drehachse aufweisen.

Am Endglied (45), insbesondere an dessen Abtriebselement, ist ein für den jeweiligen Prozess oder Prozessschritt geeignetes Werkzeug (7) fest oder lösbar, ggf. unter Zwischenschaltung einer vom Roboter (5,6) steuerbaren Wechselkupplung angeordnet. In den gezeigten Ausführungsbeispielen ist das Werkzeug (7) als Greifwerkzeug ausgebildet, mit dem Handhabungs- und Montagearbeiten durchgeführt werden können. Entsprechend der vorgenannten Prozessvarianten kann das Werkzeug (7) alternativ als Fügewerkzeug, Auftragwerkzeug, Prüfwerkzeug oder dergleichen ausgebildet sein.

Die Industrieroboter (5,6) sind jeweils mit einer eigenen oder einer gemeinsamen Robotersteuerung (nicht dargestellt) verbunden. Die Industrieroboter (5,6) sind bevorzugt als Kleinroboter mit geringem Gewicht von z.B. weniger als 50 kg und entsprechend geringer Tragkraft von z.B. weniger als 35 kg, ausgebildet. Sie können insbesondere als sogenannte Leichtbauroboter ausgeführt sein.

Die Industrieroboter (5,6) können sich in der vorerwähnten Weise hinsichtlich ihrer Steuerung, insbesondere ihrer Achsenansteuerung, unterscheiden.

Hierbei haben die Industrieroboter (6) eine Positionssteuerung oder Positionsregelung ihrer Roboterachsen und fahren die in einem Steuerprogramm abgelegten Positionen von einzelnen Raumpunkten oder einer Bahn gesteuert oder mittels einer entsprechenden Überwachungssensorik ggf. geregelt an, wobei etwaige Hindernisse oder Widerstände auf dem Weg ggf. überwunden werden. Bei Einsatz derartiger Industrieroboter (6) ist aus Sicherheitsgründen eine Schutzeinrichtung (11) vorgesehen, die in den Varianten von Figur 5 bis 7 dargestellt ist und auf die nachfolgend noch eingegangen wird.

Ein oder mehrere Industrieroboter (5) können alternativ als taktile Roboter ausgebildet sein, die mit einer geeigneten Sensorik bei ihrer Bewegung von außen einwirkende Belastungen, insbesondere Kräfte und/oder Momente, aufnehmen und bei der Steuerung berücksichtigen. Ein solcher taktiler Industrieroboter (5) kann insbesondere für eine Maschine-Roboter-Kooperation (MRK) tauglich ausgebildet sein. Er kann hierfür eine Nachgiebigkeitsregelung aufweisen, die ihn bei Auftreten unvorhergesehener Belastungen, z.B. einem evtl. Körperkontakt mit einem Werker (8), bremst oder zum Stillstand bringt.

Ein taktiler Industrieroboter (5) weist z.B. eine oder mehrere kraftgesteuerte oder kraftgeregelte Roboterachsen auf. Er kann ferner eine integrierte, Belastungen aufnehmende Sensorik aufweisen, wobei bevorzugt jeder kraftgesteuerten oder kraftgeregelten Roboterachse ein entsprechender Kraft- und/oder Momentensensor zugeordnet ist.

Ein taktiler Industrieroboter (5) kann an einer oder mehreren Roboterachsen auch mit einer Nachgiebigkeitsregelung ausgerüstet sein. Dies kann z.B. eine reine Kraftregelung oder eine kombinierte Positions- und Kraftregelung sein. Der taktile Industrieroboter (5) weist auch in diesem Fall eine integrierte und Belastungen aufnehmende Sensorik, z.B. Kraft- und/oder Momentensensoren an den betreffenden Roboterachsen, auf. Diese taktilen Industrieroboter (5) haben sensitive Eigenschaften und eignen sich besonders für Handhabungs- und Montagearbeiten. Sie können außerdem auf einfache Weise von Hand geteacht werden.

Die Bearbeitungseinrichtung (1) weist in den verschiedenen Varianten jeweils ein Gestell (4) auf, an dem die Fördereinrichtung (3) und die ein oder mehreren Industrieroboter (5,6) gemeinsam angeordnet sind.

Die Fördereinrichtung (3) kann hierbei fest oder mittels einer in Figur 1 gezeigten Halterung (38) verstellbar am Gestell (4) angeordnet sein. Die ein oder mehreren Industrieroboter (5,6) können am Gestell (4) fest oder verstellbar oder auch lösbar angeordnet sein. Hierfür kann eine in Figur 4 gezeigte Halterung (39) mit einer die erwähnte Zusatzachse bildenden Stelleinheit (41) und/oder mit einer Wechseleinheit (40) für die Schnellmontage vorgesehen sein. Die Industrieroboter (5,6) können in den verschiedenen Ausführungsbeispiel stehend oder hängend am Gestell (4) angeordnet sein. In Figur 1 bis 4 ist die Bearbeitungseinrichtung (1) jeweils mit unterschiedlichen Roboterkonfigurationen dargestellt.

Am Gestell (4) können außerdem ein oder mehrere Hilfsvorrichtungen (34) starr oder verstellbar angeordnet sein. Die Hilfvorrichtungen (34) können ggf. eigene Antriebe aufweisen und können eigenständig steuerbar oder regelbar sein. Sie können z.B. als eigenständiges Presswerkzeug oder Montagewerkzeug, z.B. für die mittels eines taktilen Industrieroboters (5) durchgeführte Montage von Wälzlagern, Sicherungsringen, Dichtungsringen oder dergleichen an einem Werkstück (2) ausgebildet sein. In Figur 1 ist eine solche Hilfsvorrichtung (34) schematisch dargestellt.

Das Gestell (4) kann in unterschiedlicher Weise ausgebildet sein. In den gezeigten und bevorzugten Ausführungsbeispielen hat es eine Portalform. Es besteht aus einem Grundgestell (27) zur Abstützung auf einen Untergrund, z.B. einem Hallenboden und einem hierauf angeordneten Aufbaugestell (29). Dieses kann ein, zwei oder mehr aufrechte Ständer (30) haben, zwischen denen zur Bildung der Portalform ein oberer, längsgerichteter Träger (31) und ggf. ein unterer bzw. mittlerer paralleler Träger (32) angeordnet sein kann. Der oder die Industrieroboter (5,6) sind beispielsweise an den zwischen den Ständern (30) sich erstreckenden Trägern (31,32) stehend oder hängend angeordnet. Auch eine seitlich versetzte Anordnung an einem, mit einem Träger (31,32) verbundenen Querjoch (33) gemäß Figur 4 ist möglich. Die Anordnung und Befestigung kann in der vorerwähnten Weise fest oder lösbar sein. Hierfür können ggf. auch mehrere vorbereitete Montagepunkte oder Halterungen (39) vorhanden sein.

Das Gestell (4) und mit ihm die Bearbeitungseinrichtung (1) kann mobil und transportabel ausgebildet sein. Hierfür kann eine Transporthilfe (28) vorgesehen sein. Die z.B. gemäß Figur 1 aus einer oder mehreren Staplertaschen besteht, welche für einen Transport die Gabel oder ein anderes Transportmittel eines entsprechenden Förderzeugs, z.B. eines Gabelstaplers, aufnehmen.

Die Fördereinrichtung (3) arbeitet als Schwerkraftförderer und weist ein oder mehrere abwärts geneigte Förderbahnen (17,18) zum geführten Transport für Werkstücke (2) oder Werkstückträger (14) auf. Die Werkstücke (2) können in direkter Auflage auf einer entsprechend ausgebildeten Förderbahn (17,18) gleitend oder rollend transportiert werden. In den gezeigten und bevorzugten Ausführungsbeispielen erfolgt der Werkstücktransport mittels eines oder mehrerer Werkstückträger (14). Die dargestellten und nachfolgend beschriebenen Ausführungsbeispiele zeigen diese Variante und können entsprechend auf eine direkte Werkstückauflage abgewandelt werden.

Die Werkstückträger (14) werden auf der oder den Förderbahnen (17,18) bevorzugt rollend durch Schwerkraft und ihr Eigengewicht transportiert. Die Fördereinrichtung (3) weist hierfür mehrere drehbare Rollkörper (15) auf, die an einer Förderbahn (17,18) und/oder an einem Werkstückträger (14) angeordnet sein können. Bevorzugt wird eine Rollkörperanordnung an einem Werkstückträger (14).

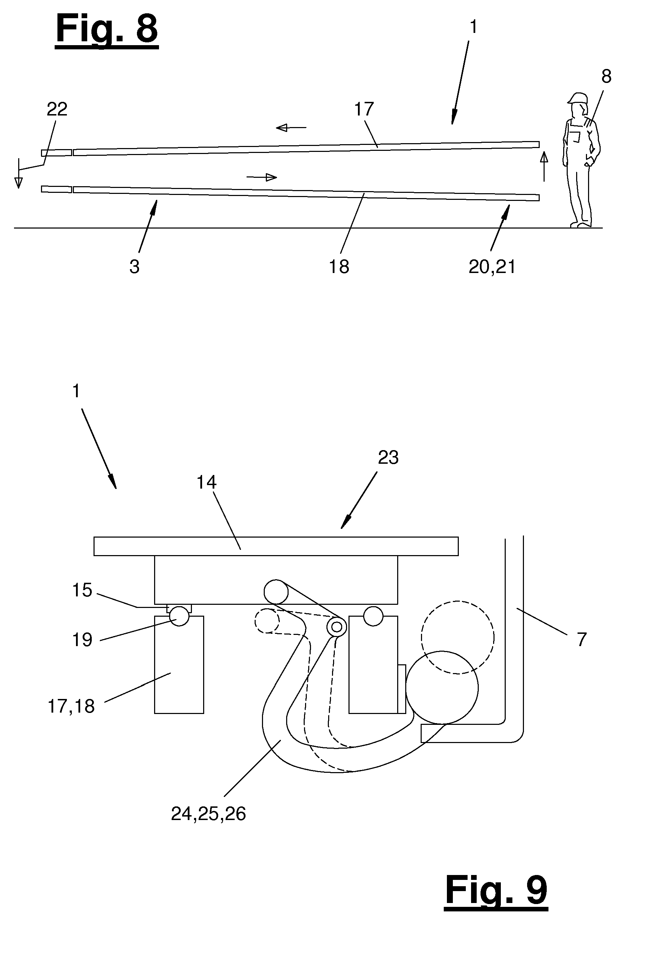

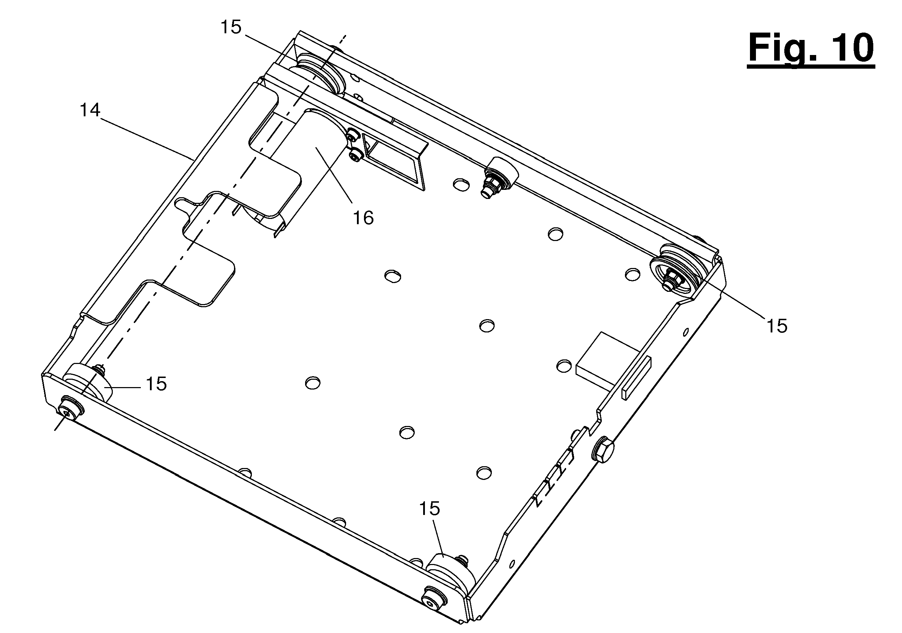

Figur 10 zeigt einen Werkstückträger (14) in einer perspektivischen Darstellung und in Unteransicht. Er weist ein z.B. kastenförmiges Gestell auf an dessen Seitenwänden mehrere, z.B. vier Rollkörper (15) bzw. Räder, drehbar angeordnet sind. Die Rollkörper (15) können eine an die Geometrie der Förderbahn(en) (17,18) angepasste Formgebung, insbesondere einen zylindrischen oder genuteten Mantel für den bevorzugt führenden Eingriff mit einer Kontaktfläche, z.B. zwei parallelen Schienen (19), einer Förderbahn (17,18) aufweisen. Figur 9 verdeutlicht diese Ausbildung.

Die Rollkörper (15) können Einzelachsen oder paarweise eine gemeinsame Achse haben. Vorzugsweise sind an einer Längsseite des Werkstückträgers (14) zwei Rollkörper (15) an einer drehbaren Wippe beidendig angeordnet. Die Wippe und die Längsseite erstrecken sich entlang der vorgesehenen Transportrichtung auf einer Förderbahn (17,18).

Der Werkstückträger (14) weist eine Bremseinrichtung (16) auf, die mindestens einem Rollkörper (15) zugeordnet ist und diesen in seiner Drehbewegung bremst. Alternativ kann eine Bremseinrichtung auch ein oder mehreren Rollkörpern an einer Förderbahn (17,18) zugeordnet sein. Die Bremseinrichtung (16) beinhaltet eine geeignete Bremse, z.B. eine mechanische Bremse oder bevorzugt eine elektrische Bremse, insbesondere eine elektrische generatorische Bremse. Die Bremswirkung kann fest eingestellt oder veränderlich sein, wobei auch eine bedarfsweise Steuerung der Bremswirkung möglich ist.

Bei der in Figur 10 gezeigten generatorischen Bremse ist z.B. eine Anlaufeinrichtung und/oder eine Regulierungseinrichtung und/oder eine Selektionseinrichtung zur eingangs erläuterten Beeinflussung der Bremswirkung vorgesehen. Bei Einsatz einer elektrischen generatorischen Bremse können ein oder mehrere dieser vorgenannten Einrichtungen als elektrische Schaltung(en) ausgebildet sein. Hierfür kann z.B. die generatorische Bremse einen mit dem Rollkörper (15) treibfähig verbundenen elektrischen Generator, insbesondere einen Gleichstromgenerator, einen Stromkreis und einen Leistungsabnehmer, z.B. einen ohmschen Widerstand, aufweisen. Der Leistungsabnehmer kann variabel sein und kann mit einer Steuereinrichtung verbunden sein, die mit einem Wählschalter oder einem anderen Bedienelement verbunden ist, das in Figur 10 am rechten Rand des Werkstückträgers (14) dargestellt ist.

Die Bremseinrichtung (16) kann dadurch an die je nach Beladungszustand, Bahnneigung, Prozessvorgaben oder dergleichen andere Erfordernisse mit ihrer Bremswirkung angepasst werden.

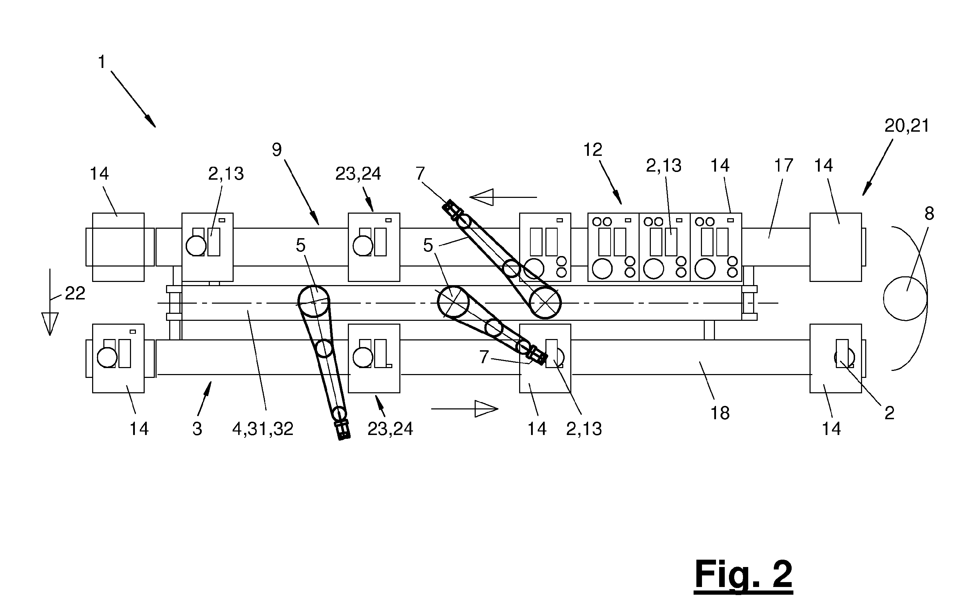

Der Werkstückträger (14) kann auf der Oberseite eine Werkstückaufnahme (nicht dargestellt) aufweisen, auf der ein oder mehrere Werkstücke (2) in einer vorgebenen und definierten Position aufgenommen werden können. Hierüber kann auch ein Ortsbezug zur jeweiligen Förderbahn (17,18) hergestellt werden, mit der der Werkstückträger (14) im Eingriff steht. Wie z.B. Figur 2 verdeutlicht, können auf dem beispielhaft palettenartigen Werkstückträger (14) mehrere Werkstückteile (13) für ein hieraus zu montierendes Werkstück (2) an vorgegebenen Stellen aufgenommen sein. Durch diesen Ortsbezug können der oder die Industrieroboter (5,6) die Werkstückteile (13) gezielt und sicher greifen, handhaben und montieren oder anderweitig bearbeiten.

In den gezeigten Ausführungsbeispielen haben die Förderbahnen (17,18) eine im wesentlichen lineare und gerade Erstreckung. Sie können alternativ einen gebogenen Verlauf haben. Sie besitzen eine geeignete Abwärtsneigung für den Schwerkrafttransport des oder der Werkstückträger (14). Die Neigung und auch die Gesamthöhe kann über die vorerwähnte Halterung (38) am Gestell (4) eingestellt werden.

Die ein oder mehreren Förderbahnen (17,18) können einteilig oder mehrteilig ausgebildet sein. Sie können aus mehreren hintereinander in Förderrichtung angeordneten Segmenten bestehen. Die Förderbahn(en) (17,18) können ferner eine veränderliche Länge, z.B. durch Einsatz der vorerwähnten Segmente, haben. In den gezeigten Ausführungsbeispielen sind die Förderbahn(en) (17,18) als Schienenbahn(en) für rollende oder alternativ gleitende Werkstückträger (14) ausgebildet. In einer anderen Variante können die Förderbahn(en) (17,18) als Rollbahn(en) mit einer Vielzahl von bevorzugt stationären und frei oder ggf. bremsbar drehbaren Rollkörpern ausgebildet sein.

Im Ausführungsbeispiel von Figur 1 bis 3 sind zwei Förderbahnen (17,18) mit im wesentlichen paralleler Ausrichtung und ggf. unterschiedlichen Neigungen am Gestell (4) seitlich nebeneinander angeordnet. Pfeile verdeutlichen die Transportrichtung der Werktücke (2) bzw. Werkstückträger (14), die in diesem Ausführungsbeispiel in einem Kreislauf bewegt werden können, wobei die Förderbahn (17) den Vorlauf und die Förderbahn (18) den Rücklauf bildet.

Am einen Ende der Fördereinrichtung (3), z.B. der gleich langen Förderbahnen (17,18), sind eine Beladestelle (20) am Vorlauf (17) und eine Entladestelle (21) am Rücklauf (18) nebeneinander angeordnet. Am gegenüberliegenden Ende ist eine Umsetzeinrichtung (22) vorhanden, mit der die Werkstückträger (14) vom Vorlauf (17) auf den Rücklauf (18) umgesetzt werden. Die Umsetzeinrichtung (22) kann in unterschiedlicher Weise ausgebildet sein und ist in den Zeichnungen durch einen Pfeil symbolisiert.

Die Be- und Entladung der Werkstückträger (14) kann manuell durch den gezeigten Werker (8) oder maschinell durch eine entsprechende Vorrichtung, z.B. einen Laderoboter, erfolgen. Zudem kann ein manuelles oder maschinelles Umsetzen der Werkstückträger (14) vom Rücklauf (18) auf den Vorlauf (17) erfolgen. Bei manueller Tätigkeit kann die Handkraft durch eine z.B. pneumatische Einrichtung unterstützt werden.

Figur 1 zeigt ein konstruktives Ausführungsbeispiel einer Umsetzeinrichtung (22), die eine am Gestell (4) angeordnete vertikale Hubeinrichtung zum Ausgleich der Höhenunterschiede zwischen den Bahnenden und einen horizontalen Fahrschlitten für den Seitentransport zwischen den Förderbahnen (17,18) aufweist. Die Umsetzeinrichtung (22) kann die Werkstücke (2) oder Werkstückträger (14) direkt greifen und umsetzen. Sie kann alternativ einen in Figur 1 und 8 angedeuteten Endabschnitt einer Förderbahn (17,18) erfassen und mitsamt dem darauf befindlichen Werkstück (2) bzw. Werkstückträger (14) transportieren. Beim Umsetzen kann auch eine Neigungsanpassung der Bahnabschnitte an die jeweilige Neigung der Förderbahn (17,18) erfolgen. Außerdem kann ein Andockvorgang durchgeführt werden, der dann einen gleitenden oder rollenden Weitertransport des umgesetzten Werkstückträgers (14) durch Eigengewicht und Schwerkraft ermöglicht. Die Umsetzeinrichtung (22) kann gesteuert und angetrieben sein, wobei die Antriebskräfte begrenzt sind und eine Nachgiebigkeit vorhanden sein kann. Alternativ kann die Umsetzeinrichtung (22) von einem Industrieroboter (5,6) gebildet werden.

In den Ausführungsbeispielen von Figur 1 bis 5 sind mehrere, z.B. zwei Förderbahnen (17,18) beidseits des Gestells (4) und insbesondere seines Aufbaugestells (29), angeordnet. Zwischen den Förderbahnen (17,18) befinden sich der oder die automatisierten Prozessbereiche (9) und der oder die dortigen Industrieroboter (5,6). In deren Arbeitsbereich befinden sich somit zwei oder mehr Förderbahnen (17,18). Der oder die Industrieroboter (5,6) können dadurch an einer oder mehreren, insbesondere allen in ihrem Arbeitsbereich befindlichen Förderbahnen (17,18) arbeiten und Prozessschritte durchführen.

In den Ausführungsbeispielen von Figur 1 bis 4 kommen nur taktile Industrieroboter (5) der vorbeschriebenen Art, bevorzugt mit einer MRK-Tauglichkeit, zum Einsatz. Hierdurch können an den Außenseiten der Förderbahnen (17,18) Werker (8) Zutritt haben und ggf. an den Werkstücken (2) arbeiten und Prozessschritte ausführen. Figur 4 verdeutlicht eine solche Ausführung.

Die Fördereinrichtung (3) weist an der oder den Förderbahn(en) (17,18) im automatisierten und ggf. manuellen Prozessbereich (9,10) eine oder mehrere Arbeitspositionen (23) auf, an denen ein Werkstückträger (14) für die Durchführung eines oder mehrerer Prozessschritte durch einen Industrieroboter (5,6) und/oder einen Werker (8) temporär angehalten und in einer vorgegebenen Stellung positioniert werden kann. An der Arbeitsposition (23) ist gemäß Figur 1 eine Positioniereinrichtung (24) angeordnet. Alternativ kann eine Bearbeitung der Werkstücke (2) während der Transportbewegung, d.h. on the fly und ggf. mit geeigneter Sensorik zur Bewegungsverfolgung, erfolgen.

Für die Positioniereinrichtung (24) ist in Figur 9 ein Konstruktionsbeispiel gezeigt. Die Positioniereinrichtung (24) kann einen Stopper (25) und/oder eine Aushubeinrichtung (26) für einen Werkstückträger (14) aufweisen. Die Positioniereinrichtung (24) kann derart ausgebildet sein, dass sie manuell durch einen Werker (8) und/oder maschinell durch einen Industrieroboter (5,6) mit einem entsprechenden Werkzeug (7) betätigt werden kann. Hierfür ist z.B. der in Figur 9 gezeigte Schwenkhebel vorgesehen, an dessen kurzem Hebelarm ein Stoppelement und an dessen längeren Hebelarm ein Gewicht angeordnet sind. Durch das Gewicht und dessen Anschlag an einer Förderbahn (17,18) wird der Stopper (25) in eine erhabene Anschlag- und Positionierstellung für einen ankommenden Werkstückträger (14) gebracht. Mit dem Werkzeug (7) oder von Hand kann für den Weitertransport das Gewicht angehoben und der Werkstückträger (14) wieder freigegeben werden. Die Positioniereinrichtung (24) kann auch so ausgebildet sein, dass der gewichtsbelastete Schwenkhebel als Aushubeinrichtung fungiert und den Werkstückträger (14) in einer ggf. verriegelten und erhabenen Stellung hält. Die Aushubeinrichtung (26) kann auch in anderer Weise, z.B. von einem manuell oder automatisch betätigten und ggf. pneumatisch angetriebenen Hubschlitten gebildet werden.

Bei der in Figur 1 bis 3 gezeigten Bearbeitungseinrichtung (1) kann dank des Einsatzes von taktilen Industrierobotern (5) auf eine Schutzeinrichtung verzichtet werden. Außerdem ist es möglich, dass ein taktiler Roboter (5) mit einem Werker (8) zusammenarbeitet. Zudem ist ein gegenseitiger Ersatz und Austausch möglich.

Die Bearbeitungseinrichtung (1) kann nahe der Fördereinrichtung (3) und im Arbeitsbereich eines Industrieroboters (5,6) und/oder eines Werkers (8) eine Bereitstellung (35) für Werkstücke oder Werkstückteile (13) und/oder eine Bereitstellung (36) für Werkzeuge (7) aufweisen. Figur 4 zeigt beispielhaft beide Anordnungen. Ein Industrieroboter (5,6) kann dadurch bedarfsweise automatisch sein Werkzeug (7) wechseln. Ferner können gemäß Figur 5 bis 7 eine oder mehrerer Zuführeinrichtungen (37) für Werkstückteile (13) oder Werkstücke an der Peripherie der Bearbeitungseinrichtung (1) und in den vorgenannten Roboter-Arbeitsbereichen vorhanden sein.

In Figur 5 ist auch eine Variante der Bereitstellung (36) für ein oder mehrere wechselbare Werkzeuge (7) dargestellt, die sich auf einem Werkstückträger (14) befinden kann und mit diesem beim Transport mitbewegt wird. Dies hat verschiedene Vorteile. Einerseits können spezielle und an das Werkstück (2) bzw. die Werkstückteile (13) adaptierte Werkzeuge (7) in beliebiger Variantenbreite und trotzdem begrenzter Zahl vorhanden sein. Dies kommt einer besonders hohen Flexibilität zugute. Ein solches Werkzeug (7) kann von mehreren Industrierobotern (5,6) bedarfsweise und temporär benutzt sowie wieder an den Werkstückträger (14) zurückgegeben werden. Trotz großer Werkzeugvielfalt bleibt dadurch der Platzbedarf für Bereitstellungen (36) klein.

Figur 5 zeigt eine Variante der Bearbeitungseinrichtung (1), die weitgehend mit der vorbeschriebenen ersten Variante von Figur 1 bis 3 und der Abwandlung von Figur 4 übereinstimmt. Im Unterschied hierzu kommen bei Figur 5 ein oder mehrere Industrieroboter (6) mit einer Positionssteuerung oder Positionsregelung zum Einsatz. Der zugehörige und einfach oder mehrfach vorhandene automatisierte Prozessbereich (9) ist daher mit einer Schutzeinrichtung (11) versehen, die ihn gegen Personenzutritt abschirmt. Dies kann z.B. eine den automatisierten Prozessbereich (9) und den oder die Industrieroboter (6) umgebende Umzäunung oder Einhausung sein. Die Fördereinrichtung (3) kann sich mit ihren Förderbahn(en) (17,18) durch die Schutzeinrichtung (11) hindurch erstrecken, wofür geeignete Schleusen vorhanden sein können.

Figur 5 zeigt außerdem mehrere in den automatisierten Prozessbereich (9) reichende Zuführeinrichtungen (37). Ferner sind zwei eingangs erwähnte Pufferbereiche (12) vorhanden. Ein erster Pufferbereich (12) kann an einer Förderbahn (17), z.B. am Vorlauf, und vor Eintritt in einen automatisierten Prozessbereich (9) angeordnet sein. Er kann als Stau- oder Stapelbereich für mehrere Werkstückträger (14) ausgebildet sein und entsprechende Vorrichtungen aufweisen. Hierdurch kann z.B. ein Werker (8) mehrere Werkstückträger (14) unabhängig vom Prozesstakt beladen und im Pufferbereich (12) parken, aus dem sie anschließend automatisch und z.B. unter Mitwirkung eines Industrieroboters (5,6) für den weiteren Transport und die Prozessfolge abgerufen werden.

Am Ausgang des automatisierten Prozessbereichs (9) kann ein weiterer Pufferbereich (12) angeordnet sein, der sich z.B. außerhalb der Schutzeinrichtung (11) befindet und an dem ein manueller Prozessbereich (10) angeordnet sein kann. Hier kann z.B. ein Werker (8) Inspektions- und Prüfungsarbeiten oder andere Prozessschritte ausführen. Hierbei ist wiederum über die Staubildung eine Entkopplung vom Prozesstakt und Fördertakt möglich.

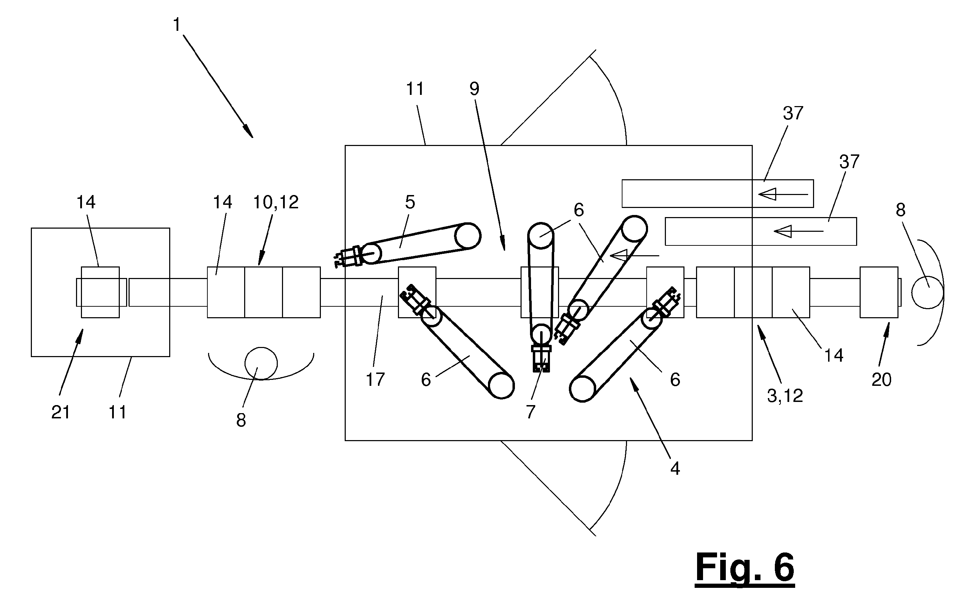

Figur 6 zeigt eine Variante zu Figur 5, bei der die Fördereinrichtung (3) eine Förderbahn (17) aufweist, die für einen Einbahnbetrieb vorgesehen ist und die Werkstückträger (14) durch einen oder mehrere Prozessbereiche (9,10) von einer Beladestelle (20) zu einer gegenüberliegenden Entladestelle (21) transportiert. Hier kann ein manuelles oder automatisiertes Entladen der Werkstücke (2) durch einen Werker oder durch eine entsprechende Entladevorrichtung, z.B. einen anderweitigen Industrieroboter, erfolgen. Die Entladestelle (21) kann ebenfalls von einer Schutzeinrichtung (11) abgeschirmt sein.

Ein Rücktransport der leeren Werkstückträger (14) ist auf unterschiedliche Weise möglich. Z.B. kann eine weitere Förderbahn (18) für den Rücktransport unterhalb der Förderbahn bzw. des Vorlaufs (17) angeordnet sein. Eine solche Anordnung kann z.B. entsprechend Figur 8 ausgebildet sein. An der Entladestelle (21) kann dabei auch eine Umsetzeinrichtung (22) vorhanden sein. Die Bearbeitungseinrichtung (1) kann auch in diesem Fall eine oder mehrere Pufferbereiche (12), eine Schutzeinrichtung (11) und eine oder mehrere Zuführeinrichtungen (37) aufweisen. Eine Fördereinrichtung (3) mit Einbahnfunktion kann auch bei einer ausschließlichen Anordnung von taktilen Industrierobotern (5) eingesetzt werden. Bei Figur 6 sind der oder die Industrieroboter (5,6) in anderer geeigneter Weise an einem nicht dargestellten Gestell (4) fest, verstellbar oder lösbar angeordnet.

Die Ausführungsform von Figur 6 kann ferner dahingehend abgewandelt werden, dass eine Werkstückbearbeitung auch auf beiden übereinander angeordneten Förderbahnen (17,18) durch entsprechend angeordnete Industrieroboter (5,6) erfolgt. Die Bahnenanordnung kann vertikal übereinander mit fluchtender Ausrichtung oder seitlichem Versatz erfolgen. Die Be- und Entladestelle können dabei wie im ersten Ausführungsbeispiel am gleichen Bahnende angeordnet sein, wobei sich am anderen Bahnende eine Umsetzeinrichtung (22) befindet.

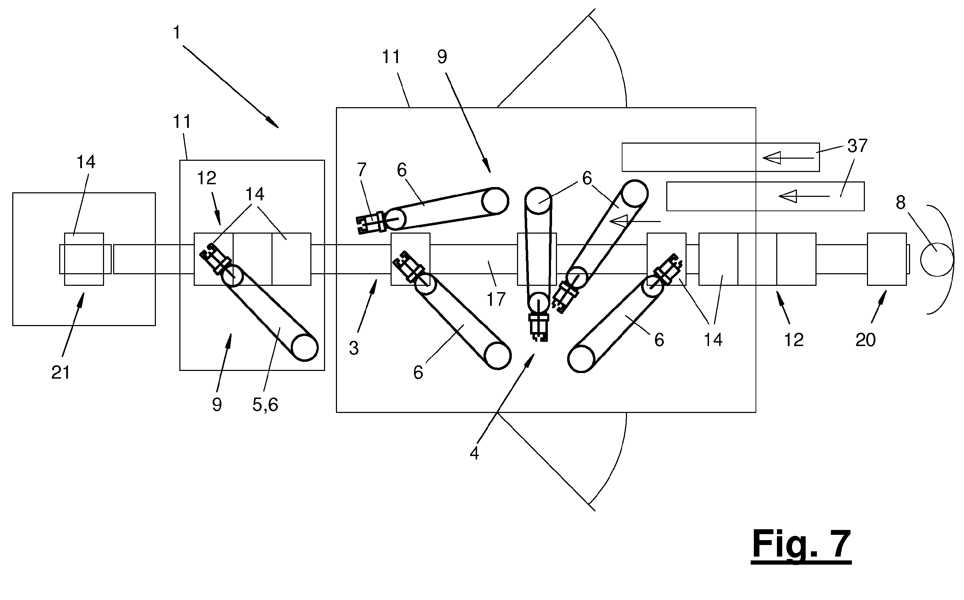

Figur 7 zeigt eine Abwandlung gegenüber Figur 6, wobei der hintere bzw. linke Pufferbereich (12) ein reiner Staubereich ist und ggf. auch als weiterer automatisierter Prozessbereich (9) ausgebildet sein kann. Im Ausführungsbeispiel von Figur 6 ist eine Kopplung des Pufferbereichs (12) mit einem manuellen Prozessbereich (10) vorgesehen. In weiterer Abwandlung kann eine reine Pufferfunktion ohne weiteren Prozessbereich (9,10) vorhanden sein.

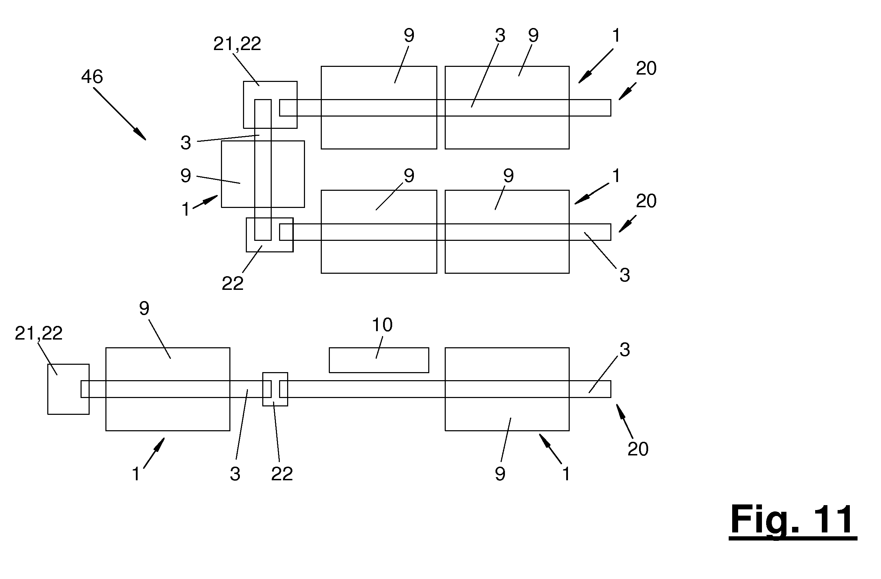

Figur 11 zeigt die eingangs erwähnte Bearbeitungsanlage (46), bei der mehrere Bearbeitungseinrichtungen (1) in geeigneter Weise miteinander gekoppelt und z.B. in Reihe oder parallel geschaltet oder auch vernetzt sind. Hierbei können die Fördereinrichtungen (3) in geeigneter Weise miteinander verbunden bzw. gekoppelt werden. Hierfür kann eine entsprechend adaptierte Umsetzeinrichtung (22) zum Einsatz kommen.

Abwandlungen der gezeigten und beschriebenen Ausführungsbeispiele sind in verschiedener Weise möglich. Dies betrifft zum einen die konstruktive Ausbildung der Bearbeitungseinrichtung (1) und ihrer Komponenten. Ferner können die Merkmale der Ausführungsbeispiele in verschiedener Weise untereinander kombiniert und ggf. auch vertauscht werden.

### BEZUGSZEICHENLISTE

- 1: Bearbeitungseinrichtung
- 2: Werkstück
- 3: Fördereinrichtung, Schwerkraftförderer
- 4: Gestell
- 5: Industrieroboter, taktiler Roboter
- 6: Industrieroboter, positionsgesteuerter Roboter
- 7: Werkzeug, Greifwerkzeug
- 8: Werker
- 9: Prozessbereich automatisiert
- 10: Prozessbereich manuell
- 11: Schutzeinrichtung, Zaun, Einhausung
- 12: Pufferbereich
- 13: Werkstückteil
- 14: Werkstückträger, Palette
- 15: Rollkörper
- 16: Bremseinrichtung
- 17: Förderbahn, Vorlaufbahn
- 18: Förderbahn, Rücklaufbahn
- 19: Schiene
- 20: Beladestelle
- 21: Entladestelle
- 22: Umsetzeinrichtung für Werkstückträger
- 23: Arbeitsposition
- 24: Positioniereinrichtung für Werkstückträger
- 25: Stopper
- 26: Aushubeinrichtung
- 27: Grundgestell
- 28: Transporthilfe, Staplertasche
- 29: Aufbaugestell
- 30: Ständer
- 31: Träger oben
- 32: Träger unten
- 33: Querjoch
- 34: Hilfsvorrichtung
- 35: Bereitstellung für Werkstücke
- 36: Bereitstellung für Werkzeuge
- 37: Zuführeinrichtung
- 38: Halterung für Fördereinrichtung
- 39: Halterung für Roboter
- 40: Wechseleinheit
- 41: Stelleinheit
- 42: Basis
- 43: Roboterarm
- 44: Roboterarm
- 45: Endglied, Roboterhand
- 46: Bearbeitungsanlage

## Patentansprüche

1. Bearbeitungseinrichtung mit einer Fördereinrichtung (3), von der Werkstücke (2), ggf. mittels eines Werkstückträgers (14), durch ihr Eigengewicht und Schwerkraft transportiert werden, wobei an der Fördereinrichtung (3) ein automatisierter Prozessbereich (9) mit einem Industrieroboter (5,6) für die Bearbeitung der Werkstücke (2) auf der Fördereinrichtung (3) angeordnet ist.

2. Bearbeitungseinrichtung nach Anspruch 1, **dadurch gekennzeichnet, dass** an der Fördereinrichtung (3) ein manueller Prozessbereich (10) für einen Werker (8) angeordnet ist.

3. Bearbeitungseinrichtung nach Anspruch 1 oder 2, **dadurch gekennzeichnet, dass** der Industrieroboter (5) als taktiler Roboter, insbesondere als MRK-tauglicher Roboter, ausgebildet ist.

4. Bearbeitungseinrichtung nach Anspruch 1, 2 oder 3, **dadurch gekennzeichnet, dass** der Industrieroboter (5) als taktiler Roboter (5) mit einer oder mehreren kraftgesteuerten oder kraftgeregelten Roboterachsen und einer integrierten, Belastungen aufnehmenden Sensorik, ausgebildet ist.

5. Bearbeitungseinrichtung nach einem der vorhergehenden Ansprüche, **dadurch gekennzeichnet, dass** die Fördereinrichtung (3) eine oder mehrere abwärts geneigte Förderbahnen (17,18) für Werkstücke (2) oder Werkstückträger (14) aufweist.

6. Bearbeitungseinrichtung nach einem der vorhergehenden Ansprüche, **dadurch gekennzeichnet, dass** die Fördereinrichtung (3) an einer Förderbahn (17,18) eine oder mehrere Arbeitspositionen (23) mit einer Positioniereinrichtung (24) für ein Werkstück (2) oder einen Werkstückträger (14) aufweist.

7. Bearbeitungseinrichtung nach Anspruch 6, **dadurch gekennzeichnet, dass** die Positioniereinrichtung (24) manuell durch einen Werker (8) und/oder maschinell durch einen Industrieroboter (5,6) betätigbar ausgebildet ist.

8. Bearbeitungseinrichtung nach einem der vorhergehenden Ansprüche, **dadurch gekennzeichnet, dass** die Fördereinrichtung (3) Rollkörper (15) für einen rollenden Transport an einer Förderbahn (17,18) oder an einem Werkstückträger (14) und eine Bremseinrichtung (16) aufweist, die einem Rollkörper (15) zugeordnet ist und diesen bremst.

9. Bearbeitungseinrichtung nach einem der vorhergehenden Ansprüche, **dadurch gekennzeichnet, dass** der Industrieroboter (5,6) verstellbar, insbesondere austauschbar oder entfernbar, ggf. im Austausch gegen einen manuellen Arbeitsplatz, angeordnet ist.

10. Bearbeitungseinrichtung nach einem der vorhergehenden Ansprüche, **dadurch gekennzeichnet, dass** die Bearbeitungseinrichtung (1) ein Gestell (4) aufweist, an dem die Fördereinrichtung (3) fest oder verstellbar und ein oder mehrere Industrieroboter (5,6) fest, verstellbar oder lösbar angeordnet sind.

11. Bearbeitungseinrichtung nach einem der vorhergehenden Ansprüche, **dadurch gekennzeichnet, dass** die Bearbeitungseinrichtung (1) nahe der Fördereinrichtung (3) im Arbeitsbereich eines Industrieroboters (5,6) und/oder eines Werkers (8) eine Bereitstellung (35,36) für Werkstückteile (13) und/oder für Werkzeuge (7) aufweist.

12. Bearbeitungsanlage für Werkstücke (2), wobei die Bearbeitungsanlage (46) mehrere Bearbeitungseinrichtungen (1) mit einer Fördereinrichtung (3) für Werkstücke (2) oder Werkstückträger (14) aufweist, **dadurch gekennzeichnet, dass** die Bearbeitungseinrichtungen (1) nach mindestens einem der Ansprüche 1 bis 11 ausgebildet sind.

13. Bearbeitungsanlage nach Anspruch 12, **dadurch gekennzeichnet, dass** die Fördereinrichtungen (3) der Bearbeitungseinrichtungen (1) untereinander jeweils verbunden, insbesondere mittels einer Umsetzeinrichtung (22) verkettet sind.

14. Verfahren zum Bearbeiten von Werkstücken (2), wobei die Werkstücke (2) von einer Fördereinrichtung (3), ggf. mittels eines Werkstückträgers (14), durch ihr Eigengewicht und Schwerkraft transportiert werden und wobei die Werkstücke (2) in einem der Fördereinrichtung (3) zugeordneten automatisierten Prozessbereich (9) mit einem Industrieroboter (5,6) auf der Fördereinrichtung (3) bearbeitet werden.

15. Verfahren nach Anspruch 14, **dadurch gekennzeichnet, dass** die Werkstücke (2) temporär in einer Arbeitsposition (23) angehalten und bearbeitet werden oder während der Transportbewegung bearbeitet werden.

## Claims

1. Machining device having a conveying device (3) by way of which workpieces (2) are transported, optionally by means of a workpiece carrier (14), by their own weight and gravity, wherein an automated processing area (9) having an industrial robot (5, 6) for machining the workpieces (2) on the conveying device (3) is arranged along the conveying device (3).

2. Machining device according to Claim 1, **characterized in that** a manual processing area (10) for a worker (8) is arranged along the conveying device (3).

3. Machining device according to Claim 1 or 2, **characterized in that** the industrial robot (5) is configured as a tactile robot, in particular as an HRC-capable robot.

4. Machining device according to Claim 1, 2 or 3, **characterized in that** the industrial robot (5) is configured as a tactile robot (5) having one or more force-controlled or force-regulated robot axes and an integrated sensor system that picks up loads.

5. Machining device according to one of the preceding claims, **characterized in that** the conveying device (3) has one or more downwardly inclined conveying tracks (17, 18) for workpieces (2) or workpiece carriers (14).

6. Machining device according to one of the preceding claims, **characterized in that** the conveying device (3) has one or more working positions (23) along a conveying track (17, 18), having a positioning device (24) for a workpiece (2) or workpiece carrier (14).

7. Machining device according to Claim 6, **characterized in that** the positioning device (24) is configured to be actuable manually by a worker (8) and/or mechanically by an industrial robot (5, 6).

8. Machining device according to one of the preceding claims, **characterized in that** the conveying device (3) has rolling bodies (15) for rolling transport on a conveying track (17, 18) or on a workpiece carrier (14), and a braking device (16) which is assigned to one rolling body (15) and brakes the latter.

9. Machining device according to one of the preceding claims, **characterized in that** the industrial robot (5, 6) is arranged in an adjustable manner, in particular in an exchangeable or removable manner, optionally in exchange for a manual workstation.

10. Machining device according to one of the preceding claims, **characterized in that** the machining device (1) has a frame (4) on which the conveying device (3) is arranged in a fixed or adjustable manner and on which one or more industrial robots (5, 6) are arranged in a fixed, adjustable or detachable manner.

11. Machining device according to one of the preceding claims, **characterized in that** the machining device (1) has, close to the conveying device (3) in the working area of an industrial robot (5, 6) and/or worker (8), a supply (35, 36) of workpiece parts (13) and/or tools (7).

12. Machining installation for workpieces (2), wherein the machining installation (46) has a plurality of machining devices (1) having a conveying device (3) for workpieces (2) or workpiece carriers (14), **characterized in that** the machining devices (1) are configured according to at least one of Claims 1 to 11.

13. Machining installation according to Claim 12, **characterized in that** the conveying devices (3) of the machining devices (1) are each connected together, in particular interlinked by means of a transfer device (22).

14. Method for machining workpieces (2), wherein the workpieces (2) are transported by a conveying device (3), optionally by means of a workpiece carrier (14), by their own weight and gravity, and wherein the workpieces (2) are machined on the conveying device (3) by an industrial robot (5, 6) in an automated processing area (9) assigned to the conveying device (3).

15. Method according to Claim 14, **characterized in that** the workpieces (2) are stopped temporarily in a working position (23) and machined or are machined during the transport movement.

## Revendications

1. Dispositif de traitement comprenant un dispositif de transport (3) par le biais duquel des pièces (2) sont transportées, éventuellement au moyen d'un porte-pièce (14), sous l'effet de leur propre poids et de la force de gravité, une région de traitement automatisée (9) avec un robot industriel (5, 6) pour le traitement des pièces (2) sur le dispositif de transport (3) étant disposée au niveau du dispositif de transport (3).

2. Dispositif de traitement selon la revendication 1, **caractérisé en ce qu'**une région de traitement manuel (10) pour un ouvrier (8) est disposée au niveau du dispositif de transport (3).

3. Dispositif de traitement selon la revendication 1 ou 2, **caractérisé en ce que** le robot industriel (5) est réalisé sous forme de robot tactile, en particulier de robot apte à la collaboration homme/robot, CHR.

4. Dispositif de traitement selon la revendication 1, 2 ou 3, **caractérisé en ce que** le robot industriel (5) est réalisé sous forme de robot tactile (5) avec un ou plusieurs axes de robot à commande de force ou à régulation de force et avec un système de capteur intégré enregistrant les contraintes.

5. Dispositif de traitement selon l'une quelconque des revendications précédentes, **caractérisé en ce que** le dispositif de transport (3) présente une ou plusieurs voies de transport inclinées vers le bas (17, 18) pour des pièces (2) ou des porte-pièces (14).

6. Dispositif de traitement selon l'une quelconque des revendications précédentes, **caractérisé en ce que** le dispositif de transport (3) présente au niveau d'une voie de transport (17, 18) une ou plusieurs positions de travail (23) avec un dispositif de positionnement (24) pour une pièce (2) ou un porte-pièce (14).

7. Dispositif de traitement selon la revendication 6, **caractérisé en ce que** le dispositif de positionnement (24) est réalisé de manière à pouvoir être commandé manuellement par un ouvrier (8) et/ou par machine par un robot industriel (5, 6).

8. Dispositif de traitement selon l'une quelconque des revendications précédentes, **caractérisé en ce que** le dispositif de transport (3) présente des corps de roulement (15) pour un transport roulant sur une voie de transport (17, 18) ou sur un porte-pièce (14) et un dispositif de frein (16) qui est associé à un corps de roulement (15) et le freine.

9. Dispositif de traitement selon l'une quelconque des revendications précédentes, **caractérisé en ce que** le robot industriel (5, 6) est disposé de manière réglable, en particulier remplaçable ou amovible, éventuellement de manière remplaçable par un poste de travail manuel.

10. Dispositif de traitement selon l'une quelconque des revendications précédentes, **caractérisé en ce que** le dispositif de traitement (1) présente un bâti (4) sur lequel le dispositif de transport (3) est disposé de manière fixe ou déplaçable et sur lequel un ou plusieurs robots industriels (5, 6) sont disposés de manière fixe, déplaçable ou amovible.

11. Dispositif de traitement selon l'une quelconque des revendications précédentes, **caractérisé en ce que** le dispositif de traitement (1) présente à proximité du dispositif de transport (3) dans la région de travail d'un robot industriel (5, 6) et/ou d'un ouvrier (8), une fourniture (35, 36) pour des parties de pièces (13) et/ou pour des outils (7).

12. Installation de traitement pour pièce (2), l'installation de traitement (46) présentant plusieurs dispositifs de traitement (1) avec un dispositif de transport (3) pour des pièces (2) ou des porte-pièces (14), **caractérisée en ce que** les dispositifs de traitement (1) sont réalisés selon au moins l'une quelconque des revendications 1 à 11.

13. Installation de traitement selon la revendication 12, **caractérisée en ce que** les dispositifs de transport (3) des dispositifs de traitement (1) sont à chaque fois connectés les uns aux autres, en particulier sont concaténés au moyen d'un dispositif de transfert (22).

14. Procédé pour traiter des pièces (2), les pièces (2) étant transportées par un dispositif de transport (3), éventuellement au moyen d'un porte-pièce (14) sous l'effet de leur propre poids et de la force de gravité et les pièces (2) étant traitées avec un robot industriel (5, 6) sur le dispositif de transport (3) dans une région de traitement (9) automatisée associée au dispositif de transport (3).

15. Procédé selon la revendication 14, **caractérisé en ce que** les pièces (2) sont temporairement arrêtées et traitées dans une position de travail (23) ou sont traitées pendant le déplacement de transport.
